# EUROPEAN PATENT APPLICATION

(11) **EP 2 910 473 A1**
(43) Date of publication of application: **26.08.2015**
(21) Application number: 15382036.0
(22) Date of filing: 04.02.2015
(51) Int. Cl.: B65B 9/093, B65B 43/04, B65B 57/04, B65B 41/16, B65B 41/18, B65B 1/02, B65B 3/02, B65B 5/02

(54) **A packaging machine with a compensation device for film printing errors**

(30) Priority: 21.02.2014 ES 201430235
(71) Applicant: Bossar Packaging, S.A., 08210 Barbera Del Valles-Barcelona (ES)
(72) Inventor: Saez Lopez, Abel, 08210 Barbera del Valles-Barcelona (ES)
(74) Representative: Urizar Anasagasti, Jesus Maria

(57) **Abstract**

A packaging machine with a compensation device for film printing errors, comprising: a film (2) unwinder (3); a drive (4); a shaper (5); a number of welders (6); a number of cutters (8) for separating the successive packages (7) before they are moved to a number of filling and closing stations; a number of photocells (14, 15) for detecting a number of blemish spots (23) printed onto the film (2) and; a compensation device for film printing errors, comprising: two guide rollers (91, 92) and a drive roller (93) fixed to a number of actuation means responsible for moving the same up to a number of positions in which the film (2) defines, between said guide rollers and said drive roller, a loop of variable length to compensate potential film (2) printing errors as it passes through the welders (6).

## Description

### Object of the invention

The present invention relates to a packaging machine with a compensation device for film printing errors.

### Field of application of the invention.

The present invention may be applied to the manufacturing of packaging machines and preferably, although not limited to, horizontal packaging machines.

### State of the art.

Several different types of packaging machines form successive packages from printed, heat-weldable film supplied from a reel.

These packaging machines comprise an unwinder, used to supply film from the reels and at least one drive, which causes the film to move forwards intermittently.

In order to make up the packages, the film that comes from the reel is folded along its centre lengthways, said film defining two opposite portions that form the opposite faces of the successive packages.

These packaging machines have a number of welders, which join the two opposite portions of the film along welding areas, which close the successive packages at the lower end and side ends thereof.

Said film is subsequently cut vertically along the welding areas, thus separating the successive packages laterally.

The drive responsible for moving the film is located near to the cutters since, once the packages have been separated, they are moved individually through successive stations, for example package filling and closing stations.

A number of blemish spots, which may be detected by photocells, are printed onto the film, in order to carry out the welding and cutting of the packages in a number of determined positions.

One of the difficulties presented by these packaging machines is the need to carry out suitable control of the forward motion of the film, in order to guarantee that both the welded joins that close the packages laterally, and the subsequent cuts that serve to separate the successive packages, are made at coinciding points, since the welded join that closes one of the sides of the package may not be wide enough to guarantee that the package is sealed hermetically once filled and closed.

This difficulty in guaranteeing that the welded joins and cuts applied to the packages are made at coinciding points results from the fact that the film supplied by the manufacturers has a printing tolerance of ± 1 millimetre per metre, thus making it necessary to include some type of system in the packaging machine, which makes it possible to compensate this printing tolerance and guarantee that the welded joins are made at suitable points, so that the subsequent cut and separation applied to the packages is made in an area that coincides with the welded joins.

One current solution applied in these packaging machines, in order to compensate for film printing errors and weld the packages at suitable points, consists of arranging a photocell in an area near to the welders, in order to detect the blemish spots printed onto the film and mounting the welders on a support that may be displaced in the forwards travel direction of the film, such that the same may be arranged at the right point for making the welded joins.

This solution is not satisfactory, since moving all of the welders requires a significant mass to be moved and said movement to be made in a reduced amount of time, which results in a lack of accuracy, especially when the printing errors to be compensated are small in size.

As such, the technical problem raised constitutes the development of a packaging machine with a compensation device for film printing errors, which has a number of constructive features suitable for compensating said printing errors, whilst keeping the welders stationary and causing the film to move forwards or backwards in the welder area.

### Description of the invention.

The packaging machine with a compensation device for film printing errors is of the abovementioned variety , i.e., suitable for forming successive packages from a printed, heat-weldable film supplied from a reel, said packaging machine comprising: a film unwinder; at least one drive, which causes the film to move forwards; a shaper for folding the film along its centre lengthways, defining two continuous, opposite bands; a number of welders for joining the two bands by means of a number of package closing areas at the lower end and side ends thereof; a number of cutters for separating the successive packages before they are moved towards the filling and closing stations; a number of photocells for detecting a number of blemish spots printed onto the film and; a compensation device for printing errors on the film.

In accordance with the invention, this compensation device for printing errors on the film comprises the following elements between the film drive and the unwinder: two free-rotating guide rollers, arranged on a first side of the film trajectory and spaced in the forwards moving direction of the film; a free-rotating drive roller, arranged on a second side of the film trajectory, between the guide rollers and fixed to a number of actuation means in a crosswise direction, controlled by a programmable logic controller (PLC) assisted by a photocell that detects the blemish spots printed on the film in an area near to the welders; said means being responsible for moving the drive roller transversally up to a number of positions in which the film defines, between the guide rollers and said drive roller, a loop of variable length, suitable for compensating potential printing errors on the film as it passes through the welders. This compensation device for printing errors satisfactorily resolves the problems of compensation devices that use mobile welders set out above, since it removes the need to move significant masses, only moving the film by means of defining a loop that is variable in length in the trajectory thereof, between the two guide rollers and the drive roller.

This drive roller is moved quickly and accurately, causing the film to move forwards or backwards in the welding area, thus compensating potential printing errors on the film.

The means responsible for moving the drive roller transversally relative to the forwards moving direction of the film may differ in nature, it having been provided that they preferably include a servomotor controlled by the PLC of the packaging machine, which moves the aforementioned drive roller linearly by means of a converter mechanism, which converts the rotary motion of the servomotor into linear motion of the drive roller.

The present invention contemplates the use of a servomotor to generate the displacement movement of the drive roller, given their accuracy and quick response, not excluding the use of any and all other means that make it possible to move the drive roller quickly and accurately in order to compensate film printing errors in the welder area.

In accordance with the invention, this packaging machine comprises a tensioner between the unwinder and the welders, used to collect the excess film supplied when the compensator device reduces the length of the loop formed by the film, in order to compensate for printing errors on the same; said tensioner thus guaranteeing that the film maintains suitable tension in the welder area.

### Description of the drawings.

In order to complement the present description, with the aim of making the characteristics of the invention more readily understandable, the present specification is accompanied by a set of drawings, in which the following are represented in an illustrative, non-limiting way:

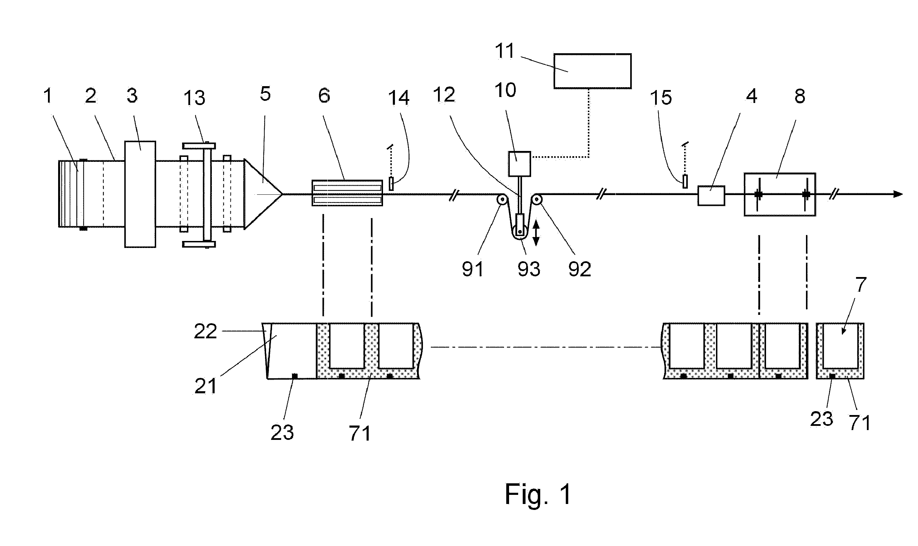

- Figure 1 is a schematic, top plan view of a packaging machine with a compensation device for film printing errors according to the invention. A schematic diagram of the packages being formed from a strip of heat-weldable film is also included in parallel to the welders and cutters.

### Preferred embodiment of the invention

In the exemplary embodiment shown in the accompanying figure, the packaging machine comprises a reel (1) for carrying the heat-weldable film (2), from which successive packages are formed, the film (2) initially being moved by a drive (4). The film (2) passes through a shaper (5), which folds it along its centre lengthways, thus forming two opposite bands (21, 22), which also form the two opposite faces of the packages. After having been folded, the film subsequently passes through a number a welders (6), which join the two bands (21, 22) along a number of closing areas (71) in the packages (7) being formed.

A number of blemish spots (23) are printed along the length of the film (2), which may be detected by a number of photocells (14, 15), which make it possible to identify the position of the film (2) along the length of the welders (7) and subsequently of a number of cutters (8) responsible for separating the successive packages (7).

Once said packages (7) have been separated, they are transported individually through other stations of the packaging machine, not shown herein, in which said packages (7) are filled and closed.

The compensation device for printing errors on the film is mounted between the drive (4) and the unwinder (3) and more specifically, between the drive (4) and the welders (6), the same being formed by the two guide rollers (91, 92) and the drive roller (93) fixed to a number of transversal actuation means formed, in this case, by a servomotor (10) controlled by a PLC (11) of the packaging machine and by a mechanism (12) that transforms the rotary motion provided by the servomotor into linear motion of the drive roller (93).

Said mechanism (12) may be a threaded spindle or any other element able to carry out said motion transformation.

The forwards and backwards motion of the drive roller enables the film (2) to form a loop of variable length between the guide rollers (91, 92) and the drive roller (93) and, as a result, forwards or backwards motion of the film in the welder area, in order to compensate potential film printing errors.

This packaging machine comprises a film tensioner (13) between the unwinder (3) and the welders (6), which aims to recover the excess film supplied when the drive roller (93) moves backwards in order to shorten the length of the loop formed by the film (2).

Having described the nature of the invention, as well as a preferred, exemplary embodiment thereof, in sufficiently detail, it must be noted that, for all intents and purposes, the materials, shape, size and arrangement of the elements described herein may be modified, provided that this does not alter the essential characteristics of the invention claimed below.

## Claims

1. A packaging machine with a compensation device for film printing errors, suitable for forming successive packages (7) from a printed, heat-weldable film (2) supplied from a reel (1), which comprises: a film (2) unwinder (3); at least one drive (4) for moving the film forwards (2); a shaper (5) for folding the film (2) along its centre lengthways, thus defining two continuous, opposite bands (21, 22); a number of welders (6) for joining the two bands (21, 22) at a number of closing areas (71) of the packages at the lower end and side ends thereof; a number of cutters (8) for separating the successive packages (7) before they are moved towards the filling and closing stations; a number of photocells (14, 15) for detecting a number of blemish spots (23) printed onto the film (2) and a compensation device for film (2) printing errors; **characterised in that** said compensation device comprises the following elements between the drive (4) and the unwinder (3): two free-rotating guide rollers (91, 92) arranged on a first side of the film (2) trajectory and spaced in the forwards moving direction of the film (2); a free-rotating drive roller (93), arranged on a second side of the film (2) trajectory, between the two guide rollers (91, 92) and fixed to an actuation means responsible for moving the same transversally relative to the forward direction of the film (2), up to a number of positions in which the film (2) defines, between the guide rollers (91, 92) and said drive roller (93), a loop of variable length, suitable for compensating potential printing errors on the film (2) as it passes through the welders (6).

2. The packaging machine according to claim 1, **characterised in that** the drive roller (93) actuation means comprise: a servomotor (10) controlled by a PLC (11) assisted by a photocell (81), which detects the blemish spots (23) printed on the film (2) in an area near to the welders (6) and; a mechanism (12) that transforms the rotary motion provided by the servomotor (10) into transversal linear motion of the drive roller (93).

3. The packaging machine, according to claim 1, **characterised in that** it comprises a film (2) tensioner between the unwinder (3) and the welders (4).
